# EUROPÄISCHE PATENTSCHRIFT

(11) **EP 0 835 745 B1**
(45) Veröffentlichungstag und Bekanntmachung des Hinweises auf die Patenterteilung: **27.11.2002**
(21) Anmeldenummer: 97115795.3
(22) Anmeldetag: 11.09.1997
(51) Int. Cl.: B29D 23/00, B29B 15/10, B29C 70/82, B29C 70/40

(54) **Verfahren und Vorrichtung zum Herstellen von rohrförmigen Hohlkörpern**
Method and apparatus for manufacturing hollow tubular bodies
Procédé et dispositif pour la fabrication de corps creux tubulaires

(30) Priorität: 18.09.1996 DE 19638022
(43) Veröffentlichungstag der Anmeldung: 15.04.1998
(73) Patentinhaber: Basell Poliolefine Italia S.p.A., 20124 Milano (IT)
(72) Erfinder: Schürmann, Helmut, Dr., 67133 Maxdorf (DE); Wenzel, Stefan, 64287 Darmstadt (DE)
(74) Vertreter: Colucci, Giuseppe

(56) Entgegenhaltungen:
- DE-A- 4 212 448
- DE-A- 4 300 208
- GB-A- 1 485 586
- US-A- 5 318 742

## Beschreibung

Die vorliegende Erfindung betrifft ein Verfahren zur Herstellung von rohrförmigen Hohlkörpern, welche aus mindestens zwei Schichten aufgebaut sind, von denen eine innere Schicht aus einem thermoplastischen Kunststoff und eine äußere Schicht aus einem mit Fasern verstärkten thermoplastischen Kunststoff aufgebaut ist.

Weiterhin bezieht sich die vorliegende Erfindung auf eine Vorrichtung zur Durchführung dieses Verfahrens.

Rohrförmige Hohlkörper dieser Art finden in den Bereichen der Technik Anwendung, in denen hochfeste Bauteile bei möglichst geringem Baugewicht gefordert werden. Diese Forderungen werden in besonderem Maße bei Druckbehältern, beispielsweise Druckluftbehältern für Lkw-Bremsanlagen, gestellt. Probleme bereitet jedoch die Verwendung eines sog. Liners, d.h. einer inneren Schicht aus einem thermoplastischen Kunststoff, auf der das verstärkende Laminat, d.h. die äußere Schicht aus einem mit Fasern verstärkten thermoplastischen Kunststoff, aufgebracht wird und die im Inneren des Hohlkörpers verbleibt. Durch Diffussion kann das eingelagerte Medium zwischen den Liner und das Laminat gelangen, so daß der Liner auf Außendruck belastet wird und durch Stabilitätsversagen gefährdet ist. Es hat sich außerdem gezeigt, daß eine innige Verbindung/Verklebung von Liner und Laminat zeitund arbeitsaufwendig ist. Insbesondere ist eine dauerhafte Verbindung dann nicht gewährleistet, wenn auf den Liner aus thermoplastischem Kunststoff eine duroplastische Laminat-Matrix aufgebracht wird (DE-A 4 215 756).

Bauteile aus mit Fasern verstärkten thermoplastischen Kunststoffen gewinnen zunehmend an Bedeutung, da sie zum einen recyclingfähig und zum anderen oft erheblich preiswerter sind als entsprechende duroplastische Systeme. In vielen Bereichen, u.a. im Automobilbau hat sich vor allem Polypropylen als Standardkunststoff etabliert. Spritzgegossene Bauteile aus kurz- und langfaserverstärktem Polypropylen werden heute bereits in großen Serien hergestellt. Für hochbelastete Bauteile, beispielsweise für Antriebswellen, Federn oder Druckbehälter benötigt man häufig eine sogenannte Endlosfaserverstärkung.

Für endlosfaserverstärkte Bauteile mit thermoplastischer Matrix existieren im Augenblick noch keine rationellen Fertigungsverfahren. Dies liegt u.a. daran, daß die bekannten Fertigungstechniken für die Verarbeitung von duroplastischen Kunststoffen meist bei Raumtemperatur durchgeführt werden, wogegen thermoplastische Kunststoffe im schmelzflüssigen Zustand, d.h. bei Temperaturen von 180 bis 300°C, verarbeitet werden.

Ein serientaugliches Fertigungsverfahren für rohrförmige Bauteile, die duroplastische Kunststoffe enthalten, ist beispielsweise das sogenannte Wickelverfahren, wobei Fasern in einer sogenannten Tränkvorrichtung mit einem duroplastischen Harz getränkt und auf einen rotierenden Kern aufgewickelt werden. Bei dieser Technik erfolgt die Tränkung und Imprägnierung der Fasern im allgemeinen unmittelbar vor Ablage der Fasern auf dem meist aus einem metallischen Werkstoff hergestellten Wickelkern. Bei der Ablage der Fasern auf den Kern stehen diese unter Spannung. Durch diese Faserspannung wird der zur Glättung erforderliche Konsolidierungsdruck aufgebracht. Der aufgebrachte Konsolidierungsdruck gewährleistet auch ein luftblasenfreies Laminat mit einem hohen Faservolumenanteil.

In Analogie zu dem beschriebenen Wickelverfahren für duroplastische Kunststoffe sind bereits Verfahren zur Herstellung von endlosfaserverstärkten, rohrförmigen Bauteilen aus thermoplastischen Kunststoffen bekannt (R. Funck, J. Hausmann, "Thermoplast-Wickelverfahren für Fahrradrahmen", Kunststoffe 85, Nr. 3, Seite 372 - 374 (1995)). Dabei werden Hybridfasern, die ein Gemisch aus Verstärkungsfasern und Fasern oder Fäden aus thermoplastischen Kunststoffen darstellen, auf einen Metallkern oder auf ein thermoplastisches Kernrohr aufgewickelt. Bei diesen Verfahren wird versucht, bei der Ablage des Fasergemisches, ein Schmelzen und eine Verschweißung der zugeführten thermoplastischen Fasern oder Fäden mit dem bereits auf dem Kern liegenden thermoplastischen Kunststoff zu erreichen. Hierzu ist es erforderlich, die benötigte Schmelzenergie während des Wickelvorgangs zuzuführen. Die thermoplastische Schmelze sollte dabei unter Druck erstarren. Diese Konsolidierung erfolgt entweder durch die Fadenspannung oder mit Hilfe von geeigneten Andruckvorrichtungen.

In der DE-A 4300208 wird ebenfalls ein Verfahren zur Herstellung von rohrförmigen Hohlkörpern beschrieben, welche aus mindestens zwei Schichten aufgebaut sind, wobei zunächst die innere Schicht des rohrförmigen Hohlkörpers durch Extrusion, Strangpressen, Spritzgießen oder Blasformen eines thermoplastischen Kunststoffs gefertigt wird, danach auf die dadurch entstehende innere Schicht des rohrförmigen Hohlkörpers Fasern abgelegt und aufgewickelt werden und anschließend in einem nachfolgenden, vom Wicklungsvorgang zeitlich und räumlich getrennten Tränkungsvorgang der rohrförmige Hohlkörper aufgeschmolzen wird, wobei sich die mit Fasern verstärkte äußere Schicht des Hohlkörpers bildet. Während des Tränkungsvorgangs wird der rohrförmige Hohlkörper nicht aufgeweitet.

Bei den bisher entwickelten Wickelverfahren zur Herstellung von endlosfaserverstärkten, rohrförmigen Bauteilen aus thermoplastischen Kunststoffen tritt das Problem auf, daß in den eigentlichen Wickelvorgang noch zwei weitere Vorgänge, das Aufschmelzen der thermoplastischen Matrix und das Konsolidieren der thermoplastischen Schmelze, integriert werden müssen. Damit wird das Wikkelverfahren aufwendiger und für Störungen anfälliger. Außerdem wird bei diesen Verfahren die maximale Wickelgeschwindigkeit abhängig von der zur Verfügung stehenden Heizleistung. Infolge der notwendigen Beheizung des Fadenablagepunktes erscheint ferner die gleichzeitige Ablage von mehreren Fäden, d.h. Fasern mit Hilfe eines Ringfadenauges unmöglich. Dies begrenzt die Geschwindigkeit der Fadenauflage. Bislang können die für eine Serienfertigung erforderlichen kurzen Taktzeiten nicht realisiert werden. Außerdem ist die Qualität der dabei erhaltenen rohrförmigen Bauteile noch nicht befriedigend.

Der vorliegenden Erfindung lag daher die Aufgabe zugrunde, ein neues Verfahren zur Herstellung von rohrförmigen Hohlkörpern auf der Basis von thermoplastischen Kunststoffen zu entwickeln, welches die geschilderten Nachteile nicht aufweist und zu rohrförmigen endlosfaserverstärkten Hohlkörpern mit einer glatten Oberfläche führt.

Demgemäß wurde ein Verfahren zur Herstellung von rohrförmigen Hohlkörpern gefunden, welche aus mindestens zwei Schichten aufgebaut sind, von denen eine innere Schicht aus einem thermoplastischen Kunststoff und eine äußere Schicht aus einem mit Fasern verstärkten thermoplastischen Kunststoff aufgebaut ist, wobei zunächst die innere Schicht des rohrförmigen Hohlkörpers durch Extrusion, Strangpressen, Spritzgießen oder Blasformen eines thermoplastischen Kunststoffs gefertigt wird, danach auf die dadurch entstehende innere Schicht des rohrförmigen Hohlkörpers Fasern abgelegt und aufgewickelt werden und anschließend in einem nachfolgenden, vom Wicklungsvorgang zeitlich und räumlich getrennten Tränkungsvorgang der rohrförmige Hohlkörper teilweise oder ganz aufgeschmolzen wird, wodurch ein Teil des die innere Schicht des rohrförmigen Hohlkörpers bildenden thermoplastischen Kunststoffs in die Faserschicht hineingepreßt wird und auf diese Weise die mit Fasern verstärkte äußere Schicht des Hohlkörpers bildet, wobei während des Tränkungsvorganges unmittelbar nach dem Aufschmelzen des rohrförmigen Hohlkörpers dieser über einen fest verankerten Aufweitdorn gezogen wird, um so einen Teil des thermoplastischen Kunststoffs, der die innere Schicht des rohrförmigen Hohlkörpers bildet, in die Faserschicht zu pressen und wobei die äußere Schicht des rohrförmigen Hohlkörpers zunächst noch geglättet und danach in einer Umformvorrichtung einer Veränderung des Querschnitts unterworfen wird.

Weiterhin wurde ein analoges Verfahren zur Herstellung von rohrförmigen Hohlkörpern gefunden, welche aus mindestens zwei Schichten aufgebaut sind, von denen eine innere Schicht aus einem thermoplastischen Kunststoff und eine äußere Schicht aus einem mit Fasern verstärkten thermoplastischen Kunststoff aufgebaut ist, wobei zunächst die innere Schicht des rohrförmigen Hohlkörpers durch Extrusion, Strangpressen, Spritzgießen oder Blasformen eines thermoplastischen Kunststoffs gefertigt wird, danach auf die dadurch entstehende innere Schicht des rohrförmigen Hohlkörpers Fasern abgelegt und aufgewickelt werden und anschließend in einem nachfolgenden, vom Wicklungsvorgang zeitlich und räumlich getrennten Tränkungsvorgang der rohrförmige Hohlkörper teilweise oder ganz aufgeschmolzen wird, wodurch ein Teil des die innere Schicht des rohrförmigen Hohlkörpers bildenden thermoplastischen Kunststoffs in die Faserschicht hineingepreßt wird und auf diese Weise die mit Fasern verstärkte äußere Schicht des Hohlkörpers bildet, wobei ein beweglicher Aufweitdorn während des Tränkungsvorganges durch den rohrförmigen Hohlkörper gezogen wird, wodurch ein Teil des thermoplastischen Kunststoffs, der die innere Schicht des rohrförmigen Hohlkörpers bildet, in die Faserschicht gepreßt wird und wobei die äußere Schicht des rohrförmigen Hohlkörpers noch geglättet und danach in einer Umformvorrichtung einer Veränderung des Querschnitts unterworfen wird.

Einer der wesentlichen Grundgedanken des erfindungsgemäßen Verfahrens besteht darin, den rohrförmigen thermoplastischen Hohlkörper zweifach zu nutzen, einerseits als Wickelkern zur gezielten Faserablage und andererseits nach dem Aufschmelzen als Matrixmaterial. Desweiteren ist es ein Vorteil des Verfahrens, den Wicklungsvorgang räumlich und zeitlich vom Tränkungsvorgang zu trennen. Das bedeutet, daß die Faser- oder Fadenablage auf die innere Schicht des rohrförmigen Hohlkörpers und das Aufschmelzen des thermoplastischen Kunststoffs zwei verschiedene, nacheinander ablaufende Vorgänge darstellen.

Das erfindungsgemäße Verfahren eignet sich u.a. zur Herstellung von rohrförmigen Hohlkörpern, die vorzugsweise endlosfaserverstärkt sind und aus mindestens zwei Schichten aufgebaut sind, die jeweils thermoplastische Kunststoffe enthalten.

Unter der Bezeichnung thermoplastische Kunststoffe sollen in diesem Zusammenhang beispielsweise Polysulfone, Polyetherketone, Polyamide, Polystyrol, Polyester, Polyvinylchlorid (PVC), Polycarbonate oder Polyolefine verstanden werden. Bevorzugt werden dabei Polyolefine verwendet, also im wesentlichen Polyethylen und Polypropylen, wobei Polypropylen bevorzugt eingesetzt wird. Dabei kann es sich sowohl um Homopolymere des Propylens als auch um Copolymere des Propylens mit untergeordneten Anteilen einpolymerisierter Comonomerer handeln.

Die Schichten des rohrförmigen Hohlkörpers können sowohl aus einem, als auch aus zwei oder mehreren unterschiedlichen thermoplastischen Kunststoffen bestehen, solange diese nur miteinander kompatibel, d.h. mischbar und verträglich sind. Die äußere Schicht des rohrförmigen Hohlkörpers wird mit Fasern, also Fäden, verstärkt.

Als Fasern oder Fäden finden hierbei u.a. Hybridgarne Verwendung, die nach einem speziellen Muster auf die Hohlkörperschicht aus dem thermoplastischen Kunststoff aufgewickelt werden.

Die Hybridgarne bestehen zweckmäßigerweise aus 10 bis 90 Vol.-% Verstärkungsfasern und 90 bis 10 Vol.-% Thermoplastfasern.

Bevorzugte Verstärkungsfasern sind Kohlenstoffasern, Aramidfasern und Glasfasern. Daneben sind auch Fasern aus keramischen Materialien, Siliciumcarbid und Bornitrid geeignet, sowie solche aus Polymeren mit einem Erweichungspunkt, der mehr als 70°C über dem Erweichungspunkt der Thermoplastfasern liegt, z.B. aus Polyetherketon oder vollaromatischen Polyamiden.

Als Thermoplastfasern kommen insbesondere Fasern aus Polyethylen, Polypropylen, Polybutylenterephthalat, Polyamid, Polysulfon und/oder Polyetherketon in Betracht.

Die Hybridgarne werden vorzugsweise nach dem aus der EP-B 156 599 bekannten Verfahren hergestellt, indem man die beiden Faserarten getrennt voneinander durch Anblasen mit Luft spreizt und dann durch Zusammenführen über Rollen oder Stäbe vermischt. Das Spreizen kann grundsätzlich auch durch einen Flüssigkeitsstrahl, durch elektrostatische Aufladung oder durch Separieren der Einzelfilamente durch Kämme erfolgen. Hierbei erhält man eine innige Vermischung der Einzelfilamente, so daß im Mischgarn Thermoplast- und Verstärkungsfasern statistisch gleichmäßig verteilt sind. Eine solche innige Vermischung ist aber nicht für alle Anwendungszwecke notwendig; man kann auch auf das Spreizen der Ausgangsfasern verzichten und diese nach einfachen Methoden vermischen, z.B. indem man sie zusammen über Rollen oder Stäbe zieht oder gemeinsam in einem Luftstrom verwirbelt.

Die Herstellung des Hybridgarns erfolgt zweckmäßigerweise bei der Herstellung der Verstärkungsfasern oder in Linie der Wickelvorrichtung.

Das erfindungsgemäße Verfahren ist u.a. dadurch charakterisiert, daß zunächst eine innere Schicht des rohrförmigen Hohlkörpers durch Extrusion, Strangpressen, Spritzgießen oder Blasformen eines thermoplastischen Kunststoffs gefertigt wird. Dies erfolgt üblicherweise in dazu geeigneten Apparaturen, beispielsweise in Extrudern, in Strangpressen, in Spritzguß- oder in Blasformmaschinen, wobei Extruder bevorzugt eingesetzt werden. Es können sowohl einwellige als auch zweiwellige Extruder verwendet werden, mit deren Hilfe nach dem erfindungsgemäßen Verfahren zunächst ein- oder mehrschichtige Hohlprofile beliebigen Querschnitts aus thermoplastischen Kunststoffen hergestellt werden.

Nach dem erfindungsgemäßen Verfahren erfolgt anschließend das Ablegen und Umwickeln der inneren Schicht des rohrförmigen Hohlkörpers mit Fasern oder Fäden, z.B. mit Hybridgarnen. Dieser Wickelvorgang kann mit in der Technik bekannten Wickelvorrichtungen, beispielsweise in sogenannten Wickelstationen durchgeführt werden. Diese bestehen u.a. aus Spulenständern, Fadenführungseinheiten (sogenannten Fadenaugen) und Einheiten, mit denen entweder der Wickelkern oder aber bei freistehenden Kernen die Spulenhalterung rotiert wird.

Dabei werden die verwendeten Fäden oder Fasern üblicherweise über einer Faserspule abgezogen und in einem bestimmten Winkel auf die Oberfläche des rohrförmigen Hohlkörpers aufgebracht. Vorzugsweise erfolgt der Wicklungsvorgang in der Weise, daß bei der Ablage des Fadens ein sogenanntes Ringfadenauge mitverwendet wird, welches die gleichzeitige Ablage von mehreren Fäden möglich macht. Der Wicklungsvorgang wird so lange durchgeführt, bis die gewünschte Wanddicke des rohrförmigen Hohlkörpers erreicht ist.

Im Anschluß daran erfolgt nach dem erfindungsgemäßen Verfahren der zeitlich und räumlich vom Wicklungsvorgang getrennte Tränkungsvorgang. Dabei wird der rohrförmige Hohlkörper teilweise oder ganz aufgeschmolzen, wobei ein Teil des die innere Schicht des rohrförmigen Hohlkörpers bildenden Kunststoffs in die Faserschicht eingepreßt wird und diese damit tränkt. Dabei verschweißen der eingepreßte thermoplastische Kunststoff und die aufgewickelten Fasern zu einem stabilen und innigen Verbund. Dieser Verbund aus dem thermoplastischen Kunststoff und den Fasern bildet die äußere Schicht des rohrförmigen Hohlkörpers.

Der Tränkungsvorgang erfolgt bei solchen Temperaturen, bei denen der eingesetzte thermoplastische Kunststoff schmilzt, also bei etwa 100 bis 400°C, insbesondere bei etwa 150 bis 270°C. Dabei können übliche Beheizungsarten, beispielsweise Flamme, Laser, Mikrowelle, Infrarotstrahlung, konvektive Heizung oder Kontaktheizung eingesetzt werden. Besonders gut geeignete Heizungsvorrichtungen sind u.a. sogenannte Zylinderheizkörper.

Nach dem Tränkungsvorgang ist es noch möglich, das Herstellungsverfahren in der Weise auszugestalten, daß die Oberfläche des entstandenen rohrförmigen Hohlkörpers noch konsolidiert, d.h. geglättet wird. Dies erfolgt beispielsweise dadurch, daß man sogenannte Glättkokillen verwendet.

Weiterhin kann man das erfindungsgemäße Verfahren dergestalt ändern, daß man in einer nachgeschalteten Umformvorrichtung die Querschnitte des rohrförmigen Hohlkörpers verändert. Dabei wird der vollständig oder nur in den Umformbrücken erwärmte rohrförmige Hohlkörper durch ein Ziehwerkzeug oder Rollenwerkzeug gezogen, welches eine kontinuierliche Querschnittsänderung vom ursprünglichen zum gewünschten Querschnitt aufweist und dadurch die plastische Umformung bewirkt.

Der Tränkungsvorgang des erfindungsgemäßen Verfahrens wird in der Weise durchgeführt, daß man in das Hohlprofil des rohrförmigen Hohlkörpers einen konisch geformten Dorn, einen sogenannten Aufweitdorn einbringt, dessen Querschnitt dem des Hohlprofils geometrisch ähnlich ist. Dabei ist der größere Teil des Aufweitdorns größer als die Hohlraumquerschnittfläche des rohrförmigen Hohlkörpers. Der Aufweitdorn wird in der Regel aus einem Werkstoff hergestellt, dessen Festigkeit und Schmelzpunkt deutlich über der Festigkeit und dem Schmelzpunkt des im rohrförmigen Hohlkörper verwendeten thermoplastischen Kunststoffs liegt. Zwischen dem rohrförmigen Hohlkörper und dem Aufweitdorn wird üblicherweise eine axiale Relativbewegung erzwungen.

Dabei kann während des Tränkungsvorgangs zum einen der rohrförmige Hohlkörper über den fest verankerten Aufweitdorn gezogen werden, zum andern kann in Umkehrung dazu ein beweglicher Aufweitdorn durch den rohrförmigen Hohlkörper gezogen werden. In beiden Fällen wird das mit Fasern bewickelte Profil des rohrförmigen Hohlkörpers im Bereich des Aufweitdorn erwärmt, so daß dort der Schmelzpunkt des thermoplastischen Kunststoffs überschritten wird, wodurch ein Teil des thermoplastischen Kunststoffs in die Faserschicht gepreßt wird. Auf diese Weise bildet sich eine dauerhafte Schweißverbindung zwischen der äußeren und der inneren Schicht des rohrförmigen Hohlkörpers.

Zur Herstellung der Schweißverbindung und zur guten Durchtränkung der Fasern ist ein sogenannter Konsolidierungsdruck erforderlich, der u.a. durch den Aufweitdorn aufgebaut und solange aufrechterhalten wird, bis die Schmelze abgekühlt ist. Durch die dabei auftretende Verschweißung der mit Fasern verstärkten äußeren Schicht und der unverstärkten inneren Schicht tritt auch eine Funktionsänderung des rohrförmigen Hohlkörpers ein. Bis zur Verschweißung dient er vor allem als Wickelkern, anschließend u.a. als sogenannter Liner oder als Chemieschutzschicht, der den Faserkunststoffverbund vor chemischen Substanzen, die sich während der Betriebszeit des Bauteils im Hohlraum des Profils befinden, schützt. Aus diesem Grund kann auch ein drei-, vieroder mehrschichtiger Aufbau des rohrförmigen Hohlkörpers sinnvoll sein. Die äußere Schicht sollte dabei aus einem thermoplastischen Kunststoff bestehen, der mit den Fasern gut verträglich ist; die innere Schicht sollte resistent gegen Chemikalien sein.

Weiterhin ist es auch möglich, den Tränkungsvorgang in der Weise durchzuführen, daß der thermoplastische Kunststoff, der die innere Schicht des rohrförmigen Hohlkörpers bildet, nur in seinem fasernahen, äußeren Bereich aufgeschmolzen wird und daß der dem Aufweitdorn zugewandte innere Teil der Wand des rohrförmigen Hohlkörpers fest bleibt. Es kann auch nur ein Teil der inneren Schicht des rohrförmigen Hohlkörpers mit Fasern umwickelt werden.

Die innere Schicht des rohrförmigen Hohlkörpers kann aus zwei verschiedenen thermoplastischen Kunststoffen bestehen, von denen der innen angeordnete Teil mit dem außen angeordneten Teil mischbar und verschweißbar ist, wobei der innen angeordnete Teil einen höheren Schmelzpunkt besitzt als der außen angeordnete Teil.

Das erfindungsgemäße Verfahren kann auch dergestalt variiert werden, daß in Höhe des Aufweitdorns um die äußere, mit Fasern verstärkte Schicht eine rohrförmige Vorrichtung angebracht wird, welche den Innendruck, der über dem Aufweitdorn erzeugt wird, aufnimmt, so daß die äußere, mit Fasern verstärkte Schicht einen Konsolidierungsdruck erfährt, was zu einer glatteren Außenwand führt. Dabei kann die rohrförmige Vorrichtung vom Aufweitdorn weg verlängert und gegebenenfalls so lange gekühlt werden, bis die geschmolzene äußere, mit Fasern verstärkte Schicht zu einer glatten Außenwand des rohrförmigen Hohlkörpers erstarrt.

Die ebenfalls erfindungsgemäße Vorrichtung zur Durchführung des erfindungsgemäßen Verfahrens besteht u.a. aus einem Extruder, einer Strangpresse, einer Spritzguß- oder einer Blasformapparatur zur Fertigung der inneren Schicht des rohrförmigen Hohlkörpers, einer daran angeschlossenen Wickelstation zum Ablegen von Fasern auf die innere Schicht, einer darauf folgenden Aufheiz- und Aufweitvorrichtung zum Tränken des rohrförmigen Hohlkörpers, einer sich daran anschließenden Glättstation zur Glättung der äußeren Schicht des rohrförmigen Hohlkörpers und einer nachgeschalteten Umformvorrichtung zum Verändern der Querschnitte. Die Aufheizund Aufweitvorrichtung kann auch noch über einen Aufweitdorn und eine rohrförmige Vorrichtung verfügen, welche in Höhe des Aufweitdorns um die äußere, mit Fasern verstärkte Schicht des rohrförmigen Hohlkörpers angebracht ist.

Das erfindungsgemäße Verfahren bietet u.a. den Vorteil, daß zwei bewährte Techniken miteinander kombiniert werden können, das Wickelverfahren und die Extrusion. Dabei können Profile beliebiger Länge im Endlosverfahren hergestellt werden. Die Dimensionen der möglichen Querschnitte entsprechen denen der konventionellen Extruder- und Wickeltechnik. Sie reichen von Bauteilen der Feinwerktechnik bis hin zu Brückenpfeilern.

Im einzelnen ergeben sich folgende Vorteile gegenüber der konventionellen Wickeltechnik:

Zum einen können alle Hohlprofile mit beliebigem Querschnitt, die bisher im Wickelverfahren mit duroplastischen Kunststoffen hergestellt werden, nun auch mit thermoplastischen Kunststoffen gefertigt werden. Dies gilt auch für Rohre mit Chemieschutzschichten. Zum andern erlauben Hohlkörper aus thermoplastischen Kunststoffen ein leichtes Recyclieren und eine leichte Weiterverarbeitung beispielsweise ein Verschweißen der Hohlkörper. Weiterhin entfällt die Entformung des Wickelkerns nach Fertigstellung des rohrförmigen Hohlkörpers, da er sehr gut verschweißt wird. Die Wickeltechnik wird weiterhin vereinfacht, da Tränkeinrichtungen zum Tränken von Fasern und Konsolidierungseinrichtungen am Faserablagepunkt überflüssig werden. Durch die Mitverwendung eines Ringfadenauges sind ferner kürzere Herstellzeiten realisierbar.

Die Erfindung wird nachfolgend anhand eines Ausführungsbeispiels näher erläutert.

### Beispiel

Mit Hilfe eines Extruders wird aus einem Polypropylengranulat ein Rohr mit einem äußeren Durchmesser von 90 mm und einer Wanddicke von 2,2 mm hergestellt. Auf das vom Extruder auslaufende Rohr wird zunächst über einen rotierenden Spulenbaum eine einschichtige 0°-Faserorientierung aus E-Glas und aus Polypropylenhybrid-Fasern, anschließend über eine rotierende Spulenhalterung, ein zweischichtiger, ausgeglichener Winkelverbund aus E-Glas und aus Polypropylenhybrid-Fasern von 54° aufgebracht.

Danach wird über einen Zylinderheizkörper das mit Fasern umwikkelte Polypropylenrohr an seiner Außenseite auf ca. 200°Cerwärmt. Das bewickelte Polypropylenrohr wird über einen Aufweitdorn gezogen, wodurch das aufgeschmolzene Polypropylen in die Faserwicklung eindringt, diese teilweise tränkt und mit dem aufgeschmolzenen Polypropylengarn verschweißt. In Bereich des Aufweitdornes erhält das Polypropylenrohr durch eine rohrförmige Vorrichtung, eine sogenannte Kokille, seine endgültige äußere Form. An der Rohrinnenseite bleibt das Polypropylen bei etwa 140°C infolge des von innen gekühlten Aufweitdornes fest und wird dabei plastisch verformt. Das abgekühlte, faserarmierte Polypropylenrohr wird zur Übertragung der notwendigen Abzugskräfte verwendet.

Auf diese Weise erhält man ein zweischichtiges mit Endlosfasern verstärktes Polypropylenrohr mit einem guten Verbund zwischen der inneren Schicht aus Polypropylen und der äußeren Schicht aus mit Polypropylen durchtränkten Fasern und mit sowohl auf der Innenals auch auf der Außenseite des Rohres glatten Oberflächen.

## Patentansprüche

1. Verfahren zur Herstellung von rohrförmigen Hohlkörpern, welche aus mindestens zwei Schichten aufgebaut sind, von denen eine innere Schicht aus einem thermoplastischen Kunststoff und eine äußere Schicht aus einem mit Fasern verstärkten thermoplastischen Kunststoff aufgebaut ist, wobei zunächst die innere Schicht des rohrförmigen Hohlkörpers durch Extrusion, Strangpressen, Spritzgießen oder Blasformen eines thermoplastischen Kunststoffs gefertigt wird, danach auf die dadurch entstehende innere Schicht des rohrförmigen Hohlkörpers Fasern abgelegt und aufgewickelt werden und anschließend in einem nachfolgenden, vom Wicklungsvorgang zeitlich und räumlich getrennten Tränkungsvorgang der rohrförmige Hohlkörper teilweise oder ganz aufgeschmolzen wird, wodurch ein Teil des die innere Schicht des rohrförmigen Hohlkörpers bildenden thermoplastischen Kunststoffs in die Faserschicht hineingepreßt wird und auf diese Weise die mit Fasern verstärkte äußere Schicht des Hohlkörpers bildet, wobei
während des Tränkungsvorganges unmittelbar nach dem Aufschmelzen des rohrförmigen Hohlkörpers dieser über einen fest verankerten Aufweitdorn gezogen wird, um so einen Teil des thermoplastischen Kunststoffs, der die innere Schicht des rohrförmigen Hohlkörpers bildet, in die Faserschicht zu pressen und wobei die äußere Schicht der rohrförmigen Hohlkörpers zunächst noch geglättet und danach in einer Umformvorrichtung einer Veränderung des Querschnitts unterworfen wird.

2. Verfahren zur Herstellung von rohrförmigen Hohlkörpern, welche aus mindestens zwei Schichten aufgebaut sind, von denen eine innere Schicht aus einem thermoplastischen Kunststoff und eine äußere Schicht aus einem mit Fasern verstärkten thermoplastischen Kunststoff aufgebaut ist, wobei zunächst die innere Schicht des rohrförmigen Hohlkörpers durch Extrusion, Strangpressen, Spritzgießen oder Blasformen eines thermoplastischen Kunststoffs gefertigt wird, danach auf die dadurch entstehende innere Schicht des rohrförmigen Hohlkörpers Fasern abgelegt und aufgewickelt werden und anschließend in einem nachfolgenden, vom Wicklungsvorgang zeitlich und räumlich getrennten Tränkungsvorgang der rohrförmige Hohlkörper teilweise oder ganz aufgeschmolzen wird, wodurch ein Teil des die innere Schicht des rohrförmigen Hohlkörpers bildenden thermoplastischen Kunststoffs in die Faserschicht hineingepreßt wird und auf diese Weise die mit Fasern verstärkte äußere Schicht des Hohlkörpers bildet, wobei
ein beweglicher Aufweitdorn während des Tränkungsvorganges durch den rohrförmigen Hohlkörper gezogen wird, wodurch ein Teil des thermoplastischen Kunststoffs, der die innere Schicht des rohrförmigen Hohlkörpers bildet, in die Faserschicht gepreßt wird und wobei die äußere Schicht des rohrförmigen Hohlkörpers noch geglättet und danach in einer Umformvorrichtung einer Veränderung des Querschnitts unterworfen wird.

3. Verfahren nach den Ansprüchen 1 oder 2, **dadurch gekennzeichnet, daß** als Fasern sogenannte Hybridgarne aus Verstärkungsfasern und aus einem solchen thermoplastischen Kunststoff verwendet werden, der mit dem thermoplastischen Kunststoff der inneren Schicht des rohrförmigen Hohlkörpers verträglich ist und der sich beim Aufschmelzen während des Tränkungsvorgangs mit der Schmelze der inneren Schicht des rohrförmigen Hohlkörpers verbindet.

4. Verfahren nach den Ansprüchen 1 bis 3, **dadurch gekennzeichnet, daß** der thermoplastische Kunststoff, der die innere Schicht des rohrförmigen Hohlkörpers bildet, nur in seinem fasernahen, äußeren Bereich aufgeschmolzen wird, und daß der dem Aufweitdorn zugewandte innere Teil der Wand des rohrförmigen Hohlkörpers fest bleibt.

5. Verfahren nach den Ansprüchen 1 bis 4, **dadurch gekennzeichnet, daß** nur ein Teil der inneren Schicht des rohrförmigen Hohlkörpers mit Fasern umwickelt wird.

6. Verfahren nach den Ansprüchen 1 bis 5, **dadurch gekennzeichnet, daß** die innere Schicht des rohrförmigen Hohlkörpers aus zwei verschiedenen thermoplastischen Kunststoffen besteht, von denen der innen angeordnete Teil mit dem außen angeordneten Teil mischbar und verschweißbar ist, wobei der innen angeordnete Teil einen höheren Schmelzpunkt besitzt als der außen angeordnete Teil.

7. Verfahren nach den Ansprüchen 1 bis 6, **dadurch gekennzeichnet, daß** als thermoplastischer Kunststoff Polypropylen verwendet wird.

8. Verfahren nach den Ansprüchen 1 bis 7, **dadurch gekennzeichnet, daß** in Höhe des Aufweitdorns um die äußere, mit Fasern verstärkte Schicht eine rohrförmige Vorrichtung angebracht wird, welche den Innendruck, der über dem Aufweitdorn erzeugt wird, aufnimmt, so daß die äußere, mit Fasern verstärkte Schicht einen Konsolidierungsdruck erfährt.

9. Verfahren nach Anspruch 8, **dadurch gekennzeichnet, daß** die rohrförmige Vorrichtung vom Aufweitdorn weg verlängert und gegebenenfalls so lange gekühlt wird, bis die geschmolzene äußere, mit Fasern verstärkte Schicht zu einer glatten Außenwand des rohrförmigen Hohlkörpers erstarrt.

10. Vorrichtung zur Durchführung eines Verfahrens gemäß den Ansprüchen 1 bis 9, bestehend aus einem Extruder, einer Strangpresse, einer Spritzguß- oder einer Blasformapparatur zur Fertigung der inneren Schicht des rohrförmigen Hohlkörpers, einer daran angeschlossenen Wickelstation zum Ablegen von Fasern auf die innere Schicht, einer darauf folgenden Aufheiz- und Aufweitvorrichtung zum Tränken des rohrförmigen Hohlkörpers, einer sich daran anschließenden Glättstation zum Glätten der äußeren Schicht des rohrförmigen Hohlkörpers und einer nachgeschalteten Umformvorrichtung zum Verändern der Querschnitte.

11. Vorrichtung nach Anspruch 10, wobei die Aufheiz- und Aufweit-vorrichtung einen Aufweitdorn und eine rohrförmige Vorrichtung aufweist, welche in Höhe des Aufweitdorns um die äußere, mit Fasern verstärkte Schicht des rohrförmigen Hohlkörpers angebracht ist.

## Claims

1. A process for producing hollow tubular articles constructed of at least two layers, of which an inner layer is formed from a thermoplastic and an outer layer is formed from a fiber-reinforced thermoplastic, which comprises first producing the inner layer of the hollow tubular article by extrusion, injection molding or blow molding a thermoplastic, then winding fibers onto the resultant inner layer of the hollow tubular article and then, in an impregnation procedure which is chronologically and spatially separate from the filament-winding process, partially or fully melting the hollow tubular article with the result that a part of the thermoplastic forming the inner layer of the hollow tubular article is pressed into the fiber layer and thus forms the fiber-reinforced outer layer of the hollow article, wherein, during the impregnation procedure immediately following the melting of the hollow tubular article, the latter is drawn over a fixed expansion mandrel in order to press a part of the thermoplastic which forms the inner layer of the hollow tubular article into the fiber layer, and wherein the outer layer of the hollow tubular article is first also smoothed and then subjected to a change in cross-sectional shape in a reshaping apparatus.

2. A process for producing hollow tubular articles constructed of at least two layers, of which an inner layer is formed from a thermoplastic and an outer layer is formed from a fiber-reinforced thermoplastic, which comprises first producing the inner layer of the hollow tubular article by extrusion, injection molding or blow molding a thermoplastic, then winding fibers onto the resultant inner layer of the hollow tubular article and then, in an impregnation procedure which is chronologically and spatially separate from the filament-winding process, partially or fully melting the hollow tubular article with the result that a part of the thermoplastic forming the inner layer of the hollow tubular article is pressed into the fiber layer and thus forms the fiber-reinforced outer layer of the hollow article, wherein a movable expansion mandrel is drawn through the hollow tubular article during the impregnation procedure, with the result that a part of the thermoplastic which forms the inner layer of the hollow tubular article is pressed into the fiber layer, and wherein the outer layer of the hollow tubular article is also smoothed and then subjected to a change in cross-sectional shape in a reshaping apparatus.

3. A process as claimed in claims 1 or 2, wherein the fibers are hybrid yarns comprising reinforcing fibers and fibers of a thermoplastic which is compatible with the thermoplastic of the inner layer of the hollow tubular article and which on melting during the impregnation procedure unites with the melt from the inner layer of the hollow tubular article.

4. A process as claimed in any of claims 1 to 3, wherein the thermoplastic which forms the inner layer of the hollow tubular article is melted only in its outer region, close to the fibers, and the inner part of the wall of the hollow tubular article, which faces the expansion mandrel, remains solid.

5. A process as claimed in any of claims 1 to 4, wherein only a part of the inner layer of the hollow tubular article is wrapped with fibers.

6. A process as claimed in any of claims 1 to 5, wherein the inner layer of the hollow tubular article comprises two different thermoplastics, of which the part arranged on the inside is miscible and fusible with the part arranged on the outside, and the part arranged on the inside has a higher melting point than the part arranged on the outside.

7. A process as claimed in any of claims 1 to 6, wherein the thermoplastic is polypropylene.

8. A process as claimed in any of claims 1 to 7, wherein a tubular apparatus is applied around the outer, fiber-reinforced layer, at a position corresponding to that of the expansion mandrel, to absorb the internal pressure created via the expansion mandrel, so that the outer, fiber-reinforced layer expreiences a consolidating pressure.

9. A process as claimed in claim 8, wherein the tubular apparatus is extended beyond the expansion mandrel and, if appropriate, is cooled until the molten outer, fiber-reinforced layer has hardened to give a smooth outer wall of the hollow tubular article.

10. An apparatus for carrying out a process as claimed in any of claims 1 to 9, comprising an extruder or an injection-molding or blow-molding machine for producing the inner layer of the hollow tubular article, attached to which is a filament-winding station for winding fibers onto the inner layer, then a heating and expansion apparatus for impregnating the hollow tubular article, attached to which is a polishing station for smoothing the outer layer of the hollow tubular article and a downstream reshaping apparatus for changing cross-sectional shapes.

11. An apparatus as claimed in claim 10, wherein the heating and expansion apparatus comprises an expansion mandrel and a tubular apparatus which is applied around the outer, fiber-reinforced layer of the hollow tubular article at a position corresponding to that of the expansion mandrel.

## Revendications

1. Procédé de fabrication de corps creux en forme de tube, qui sont composés d'au moins deux couches, une couche interne en matière composite thermoplastique et une couche externe composée d'une matière composite thermoplastique renforcée de fibres, corps creux dans lequel, en premier lieu, la couche interne du corps creux en forme de tube est fabriquée par extrusion, façonnage par filière, injection ou soufflage d'une matière composite thermoplastique, puis des fibres sont déposées et enroulées sur la couche interne ainsi obtenue du corps creux en forme de tube, et enfin, le corps creux en forme de tube est traité de manière totale ou partielle, par un processus d'imprégnation subséquent, séparé dans le temps et dans l'espace du processus d'enroulement, procédé par lequel une partie de la matière composite thermoplastique constituant la couche interne du corps creux en forme de tube est pressée à l'intérieur de la couche de fibres et compose ainsi la couche externe renforcée de fibres du corps creux, de telle manière que pendant le processus d'imprégnation immédiatement après la surfusion du corps creux en forme de tube, celui-ci est étiré sur une broche de mandrin solidement fixée, pour presser ainsi dans la couche de fibres une partie de la matière composite thermoplastique qui constitue la couche interne du corps creux en forme de tube, de telle manière que la couche externe du corps creux en forme de tube est d'abord lissée et ensuite placée dans un dispositif de formage pour modification de la section.

2. Procédé de fabrication de corps creux en forme de tubes, qui sont composés d'au moins deux couches, dont une couche interne en matière composite thermoplastique et une couche externe composée d'une matière composite thermoplastique renforcée de fibres, corps creux dans lequel, en premier lieu, la couche interne du corps creux en forme de tube est fabriquée par extrusion, façonnage par filière, injection ou soufflage d'une matière composite thermoplastique, puis des fibres sont déposées et enroulées sur la couche interne ainsi obtenue du corps creux en forme de tube, et enfin, le corps creux en forme de tube est traité de manière totale ou partielle, par un processus d'imprégnation subséquent, séparé dans le temps et dans l'espace du processus d'enroulement, procédé par lequel une partie de la matière composite thermoplastique constituant la couche interne du corps creux en forme de tube est pressée à l'intérieur de la couche de fibres et compose ainsi la couche externe renforcée de fibres du corps creux, de telle manière que pendant le processus d'imprégnation une broche de mandrin mobile, est tirée à travers le corps creux en forme de tube pour presser ainsi dans la couche de fibres une partie de la matière composite thermoplastique qui constitue la couche interne du corps creux en forme de tube, de telle manière que la couche externe du corps creux en forme de tube soit d'abord lissée et ensuite placée dans un dispositif de formage pour modification de la section.

3. Procédé selon les revendications 1 ou 2, **caractérisé en ce qu'**on utilise comme fibres, les dénommés fils hybrides faits de fibres de renforcement et d'une matière composite thermoplastique qui est compatible avec la matière composite thermoplastique de la couche interne du corps creux en forme de tube et qui, lors de la surfusion pendant l'opération d'imprégnation (1) se lie par fusion avec la couche interne du corps creux en forme de tube.

4. Procédé selon les revendications 1 à 3, **caractérisé en ce que** la matière composite thermoplastique qui constitue la couche interne du corps creux en forme de tube ne fait l'objet d'une fusion que dans sa partie externe, voisine des fibres et **en ce que** la partie interne de la paroi du corps creux en forme de tube, tournée vers la broche de mandrin, reste ferme.

5. Procédé selon les revendications 1 à 4, **caractérisé en ce que** seule une partie de la couche interne du corps creux en forme de tube est enveloppée de fibres.

6. Procédé selon les revendications 1 à 5, **caractérisé en ce que** la couche interne du corps creux en forme de tube se compose de deux différentes matières composites thermoplastiques, parmi lesquelles la partie située à l'intérieur est miscible et soudable avec la partie située à l'extérieur, la partie située à l'intérieur ayant un point de fusion supérieur à la partie située à l'extérieur.

7. Procédé selon les revendications 1 à 6, **caractérisé en ce que** le polypropylène est utilisé comme matière composite thermoplastique.

8. Procédé selon les revendications 1 à 7, **caractérisé en ce qu'**on place à la hauteur de la broche de mandrin autour de la couche externe renforcée de fibres, un dispositif en forme de tube qui reçoit la pression interne appliquée sur la broche de mandrin, de telle sorte que la couche externe renforcée de fibres en subisse une pression de consolidation.

9. Procédé selon la revendication 8, **caractérisé en ce que** le dispositif en forme de tube est prolongé à partir de la broche de mandrin et le cas échéant refroidi jusqu'à ce que la couche externe renforcée de fibres se solidifie pour constituer un revêtement lisse du corps creux en forme de tube.

10. Dispositif en vue de l'exécution d'un procédé selon les revendications 1 à 9, constitué d'une extrudeuse, une étireuse et un appareil d'injection ou de soufflage pour la fabrication de la couche interne du corps creux en forme de tube, d'une machine à bobiner liée à ces dernières pour l'application des fibres sur la couche interne, d'un dispositif d'élargissement et de chauffe pour l'imprégnation du corps creux en forme de tube, d'un poste de lissage relié à ces dernières pour le lissage de la couche externe du corps creux en forme de tube et d'un dispositif de formage monté en série pour la modification de la section.

11. Dispositif selon la revendication 10, **caractérisé en ce que** le dispositif d'élargissement et de chauffe comporte une broche de mandrin et un dispositif en forme de tube qui vient entourer, à la hauteur de la broche de mandrin, la couche externe renforcée de fibres du corps creux en forme de tube.
